(19) Europäisches Patentamt
European Patent Office
Office européen des brevets

(11) **EP 3 260 820 B1**

(12) **EUROPÄISCHE PATENTSCHRIFT**

(45) Veröffentlichungstag und Bekanntmachung des Hinweises auf die Patenterteilung:
**05.12.2018 Patentblatt 2018/49**

(51) Int Cl.:
***G01D 5/347*** *(2006.01)*   ***G01D 5/26*** *(2006.01)*
***G01D 5/38*** *(2006.01)*

(21) Anmeldenummer: **17174897.3**

(22) Anmeldetag: **08.06.2017**

(54) **OPTISCHE POSITIONSMESSEINRICHTUNG**

OPTICAL POSITIONING DEVICE

DISPOSITIF OPTIQUE DE MESURE DE POSITION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.06.2016 DE 102016211150**

(43) Veröffentlichungstag der Anmeldung:
**27.12.2017 Patentblatt 2017/52**

(73) Patentinhaber: **Dr. Johannes Heidenhain GmbH 83301 Traunreut (DE)**

(72) Erfinder:
• **HOLZAPFEL, Wolfgang 83119 Obing (DE)**
• **LINGK, Christoph 83278 Traunstein (DE)**
• **BENNER, Ulrich 83308 Trostberg (DE)**
• **TRAUTNER, Johannes verstorben (DE)**

(56) Entgegenhaltungen:
EP-A1- 0 005 798    EP-A1- 1 382 941
EP-B1- 0 470 291    JP-A- 2008 151 529

**Beschreibung**

## GEBIET DER TECHNIK

Die vorliegende Erfindung betrifft eine optische Positionsmesseinrichtung. Diese ist zur Bestimmung der Position eines ersten Objekts gegenüber einem zweiten Objekt geeignet.

## STAND DER TECHNIK

Eine gattungsgemäße Positionsmessanordnung ist etwa aus der EP 0 470 291 B1 bekannt. Diese dient zur Bestimmung der Position eines ersten Objekts gegenüber einem zweiten Objekt, welches relativ hierzu entlang mindestens einer Messrichtung beweglich angeordnet ist. Hierbei ist einerseits eine sich entlang der ersten Messrichtung erstreckende Maßverkörperung vorgesehen, die mit dem ersten Objekt verbunden ist. Die Maßverkörperung umfasst eine Messteilung, welche aus alternierend entlang der Messrichtung angeordneten Teilungsbereichen mit unterschiedlichen optischen Eigenschaften besteht. Andererseits ist eine Abtasteinheit mit dem zweiten Objekt verbunden, die mindestens eine Lichtquelle, eine Detektoranordnung sowie eine Faseroptik-Anordnung umfasst. Die Faseroptik-Anordnung besteht aus einer Vielzahl aneinandergrenzend angeordneter Lichtleitfasern, deren Bildeintrittsflächen der Maßverkörperung und deren Bildaustrittsflächen der Detektoranordnung zugewandt sind. Aus der Wechselwirkung zwischen den von der Lichtquelle emittierten Strahlenbündeln mit der Messteilung resultiert ein Lichtmuster, das die Faseroptik-Anordnung in eine Detektionsebene der Detektoranordnung überträgt. Mit Hilfe der Detektoranordnung können aus dem erfassten Lichtmuster positionsabhängige Signale bezüglich der Position der beiden zueinander beweglichen Objekte erzeugt und an eine nachgeordnete Folgeelektronik übertragen werden.

Eine derartige Positionsmesseinrichtung ermöglicht beispielsweise in einer Maschine die Position einer beweglichen Maschinenkomponente gegenüber einem demgegenüber stationären Maschinenrahmen zu bestimmen. Die bewegliche Maschinenkomponente einerseits und der stationäre Maschinenrahmen andererseits fungieren hier somit als die beiden zueinander beweglichen Objekte. Als Folgeelektronik dient eine übergeordnete Maschinensteuerung, die die erzeugten positionsabhängigen Signale etwa zur Positionierung der beweglichen Maschinenkomponente nutzt.

Das Dokument EP1382941 offenbart eine Positionsmesseinrichtung gemäß dem Stand der Technik.

Die Faseroptik-Anordnung ist in einem Ausführungsbeispiel der zitierten Druckschrift als Linsenpaket mit mehreren Stablinsen ausgebildet. Das Linsenpaket besitzt hierbei einen Abbildungsmaßstab von 1:1 und sorgt für die Abbildung des aus der Abtastung einer absolutcodierten Codespur resultierenden Lichtmusters in eine Bildebene, die die Detektionsebene einer Detektoranordnung darstellt. Die vorgeschlagene Anordnung der einzelnen Komponenten erweist sich jedoch im Hinblick auf eine möglichst kontrastreiche Abbildung des Lichtmusters in der Detektionsebene als nicht optimal. Aufgrund von Reflexionen an verschiedenen Grenzflächen resultiert unerwünschtes Streulicht, was die Qualität der erzeugten positionsabhängigen Signale negativ beeinflusst.

Außerdem führt die nennenswerte Verzeichnung der Stablinsen dazu, dass die Flächen der Codespur, die nahe an den Mantelflächen der Codespur liegen, schlecht abgebildet werden. Als Folge resultieren Positionsfehler der erzeugten positionsabhängigen Signale im Raster der Stablinsen, die für hochgenaue Positionsmesseinrichtungen nicht akzeptabel sind.

Ein weiterer Nachteil ergibt sich aufgrund der großen Länge der Stablinsen, die für einen erforderlichen Abbildungsmaßstab A = 1 notwendig sind. Derartige Stablinsen haben typischerweise eine Länge von 4 - 6mm und erlauben daher keine kompakte Baugröße der Positionsmesseinrichtung.

## ZUSAMMENFASSUNG DER ERFINDUNG

Der vorliegenden Erfindung liegt die Aufgabe zugrunde, eine optische Positionsmesseinrichtung der eingangs erläuterten Art anzugeben, in der eine kontrastreiche Abbildung des aus der optischen Abtastung der Messteilung resultierenden Lichtmusters in der Detektionsebene der Detektoranordnung gewährleistet ist.

Diese Aufgabe wird erfindungsgemäß durch eine optische Positionsmesseinrichtung mit den Merkmalen des Anspruchs 1 gelöst.

Vorteilhafte Ausführungen der erfindungsgemäßen optischen Positionsmesseinrichtung ergeben sich aus den Maßnahmen, die in den abhängigen Ansprüchen aufgeführt sind.

Die erfindungsgemäße optische Positionsmesseinrichtung dient zur Bestimmung der Position eines ersten Objekts gegenüber einem relativ hierzu entlang mindestens einer Messrichtung beweglichen zweiten Objekt. Die Positionsmesseinrichtung umfasst eine sich entlang der Messrichtung erstreckende Maßverkörperung, die mit dem ersten Objekt verbunden ist und weist mindestens eine Messteilung auf, die aus alternierend entlang der Messrichtung angeordneten Teilungsbereichen mit unterschiedlichen optischen Eigenschaften besteht. Ferner ist eine Abtasteinheit vorgesehen, die mit dem zweiten Objekt verbunden ist und mindestens eine Lichtquelle, eine Detektoranordnung sowie mindestens eine Faseroptik-Anordnung umfasst, die aus einer Vielzahl aneinandergrenzend angeordneter Lichtleitfasern besteht, deren Bildeintrittsflächen der Maßverkörperung und deren Bildaustrittsflächen der Detektoranordnung zugewandt sind. Aus der Wechselwirkung zwischen den von der Lichtquelle emittierten Strahlenbündeln mit der Messteilung resultiert ein Lichtmuster, das die Faseroptik-Anordnung in eine Detektionsebene der Detektoranordnung überträgt. Die Faseroptik-Anordnung ist als Faseroptik-Platte ausgebildet; zwischen der Bildaustrittsfläche der Faseroptik-Platte und der Detektoranordnung ist ein Zwischenraum-Medium angeordnet ist, welches sicherstellt, dass die aus der Bildaustrittsfläche austretenden Strahlenbündel auf ihrem Weg zur Detektoranordnung eine geringere Ablenkung erfahren als im Fall ohne Zwischenraum-Medium.

Vorzugsweise weist das Zwischenraum-Medium einen Brechungsindex im Bereich

$$1.3 < n_{ZM} < 2.3$$

auf, mit $n_{ZM} :=$ Brechungsindex des Zwischenraum-Mediums.

Ferner kann vorgesehen sein, dass die Dicke des Zwischenraum-Mediums im Bereich

$$5\mu m < d_{ZM} < 100\mu m$$

liegt, mit $d_{ZM} :=$ Dicke des Zwischenraum-Mediums.

Mit Vorteil ist ein Klebstoff als Zwischenraum-Medium vorgesehen.

Es ist desweiteren möglich, dass die Dicke der Faseroptik-Platte im Bereich

$$2 \cdot d_x < d_{FP} < d_x / 4 \cdot \rho$$

liegt, mit

$d_{FP} :=$ Dicke der Faseroptik-Platte

$d_x :=$ Teilungsperiode einer periodischen Messteilung oder minimale Strukturbreite einer aperiodischen Messteilung entlang der Messrichtung

$p :=$ Verzerrungsfaktor der Faseroptik-Platte, der dem lateralen Versatz entspricht, der bei der Übertragung des Lichtmusters über die Faseroptik-Platte zwischen Bildeintrittsfläche und Bildaustrittsfläche relativ zur Faserlänge resultiert

Vorteilhafterweise kann ferner vorgesehen sein, dass

- die Detektoranordnung aus einer entlang der Messrichtung periodischen Anordnung einzelner Detektorelemente im Raster einer definierten Detektor-Periodizität besteht und
- die Lichtleitfasern in der Faseroptik-Platte entlang der Messrichtung in einem periodischen Raster mit einer ersten Faseroptik-Periodizität angeordnet sind, für die

$$P_{FPx} \leq P_{DET}$$

gilt, mit

$P_{FPx} :=$ erste Faseroptik-Periodizität entlang der Messrichtung x

$P_{DET} :=$ Detektor-Periodizität entlang der Messrichtung x

Dabei ist es zudem möglich, dass die Lichtleitfasern in der Faseroptik-Platte entlang einer Richtung senkrecht zur Messrichtung in einem periodischen Raster mit einer zweiten Faseroptik-Periodizität angeordnet sind, für die

$$P_{FPy} = P_{FPx}$$

gilt, mit

$P_{FPx}$ := erste Faseroptik-Periodizität entlang der Messrichtung

$P_{FPy}$ := zweite Faseroptik-Periodizität entlang einer Richtung senkrecht zur Messrichtung

Desweiteren kann vorgesehen sein, dass für den Abstand zwischen der Messteilung und der Bildeintrittsfläche der Faseroptik-Platte

$$d_{MBE} \leq 200\mu m$$

gilt, mit $d_{MBE}$ := Abstand zwischen der Messteilung und der Bildeintrittsfläche.

In einer möglichen Variante weist die Faseroptik-Platte einen rechteckförmigen Querschnitt auf, wobei sich die Rechtecks-Längsachse parallel zur Messrichtung erstreckt.

Schließlich ist es möglich, dass in der Faseroptik-Platte zwischen den Lichtleitfasern ein Glasmedium angeordnet ist, das Licht absorbiert, welches nicht zur Signalerzeugung beiträgt.

Es kann ferner vorgesehen sein, dass die Messteilung als Absolut-Messteilung ausgebildet ist, die eine aperiodische Codierung zur Absolutpositionsbestimmung aufweist und die Detektoranordnung als Absolut-Detektoranordnung zur Erfassung des von der Absolut-Messteilung übertragenen aperiodischen Lichtmusters ausgebildet ist.

Hierbei kann auf der Maßverkörperung parallel zur Absolut-Messteilung eine weitere Messteilung in Form einer Inkremental-Teilung angeordnet sein, aus deren optischer Abtastung ein periodisches Lichtmuster in der Detektionsebene resultiert, welches dort über eine Inkremental-Detektoranordnung erfassbar ist.

Desweiteren kann die Inkremental-Teilung als Amplitudengitter ausgebildet sein und zur optischen Abtastung der Inkremental-Teilung ein Abtastgitter zwischen der Inkremental-Teilung und der Inkremental-Detektoranordnung angeordnet sein, das als Transmissions-Abtastgitter oder als Phasengitter ausgebildet ist.

Vorzugsweise gelten für die Teilungsperiode der Inkremental-Teilung und die Periodizität des resultierenden Lichtmusters in der Detektionsebene die Beziehungen

$$d_1 = d_2 \cdot (u + v) / v$$

$$d_3 = d_2 \cdot (u + v) / u$$

mit

$d_1$ := Teilungsperiode der Inkremental-Teilung

$d_2$ := effektive Teilungsperiode des Abtastgitters

$d_3$ := Periodizität des in der Detektionsebene resultierenden Lichtmusters

$u$ := Abstand zwischen Inkremental-Teilung und Abtastgitter

$v$ := Abstand zwischen Abtastgitter und Detektionsebene.

Als vorteilhaft erweist sich bei der erfindungsgemäßen optischen Positionsmesseinrichtung, dass über die erfindungsgemäßen Maßnahmen eine besonders kontrastreiche Abbildung des Lichtmusters in der Detektionsebene und damit eine gute Qualität der positionsabhängigen Signale gewährleistet werden kann. Im Abbildungs-Strahlengang lassen sich Brechungsindex-Sprünge zwischen verschiedenen Medien vermeiden. Es resultieren weniger unerwünschte Reflexionen an Grenzflächen und damit weniger störendes Streulicht.

Desweiteren lässt sich erfindungsgemäß abtastseitig ein besonders kompakter und verschmutzungsunempfindlicher Aufbau realisieren, insbesondere bei der Abtastung einer absolut-codierten Messteilung mit Hilfe einer Faseroptik-Anordnung in Form einer Faseroptik-Platte.

Darüber hinaus resultiert eine nahezu verzeichnungsfreie Abbildung des Lichtmusters in die Detektionsebene, so dass hochgenaue positionsabhängige Signale erzeugbar sind.

Weitere Einzelheiten und Vorteile der vorliegenden Erfindung seien anhand der nachfolgenden Beschreibung von Ausführungsbeispielen der erfindungsgemäßen Vorrichtung in Verbindung mit den Figuren erläutert.

## KURZE BESCHREIBUNG DER ZEICHNUNGEN

Es zeigt

Figur 1     eine stark schematisierte Darstellung eines Ausführungsbeispiels der erfindungsgemäßen optischen Positionsmesseinrichtung in einer Schnittansicht;

Figur 2     eine vergrößerte räumliche Teilansicht der optischen Positionsmesseinrichtung aus Figur 1;

Figur 3     eine weitere vergrößerte Teilansicht der Positionsmesseinrichtung aus Figur 1 zur Erläuterung der optischen Wirkung eines geeignet gewählten Zwischenraum-Mediums;

Figur 4     eine weitere vergrößerte Teilansicht der Positionsmesseinrichtung aus Figur 1 zur Erläuterung geeigneter Dimensionierungsregeln für die Faseroptik-Platte;

Figur 5     eine weitere vergrößerte Teilansicht der Positionsmesseinrichtung aus Figur 1 zur Erläuterung weiterer geeigneter Dimensionierungsregeln für die Faseroptik-Platte.

## BESCHREIBUNG DER AUSFÜHRUNGSFORMEN

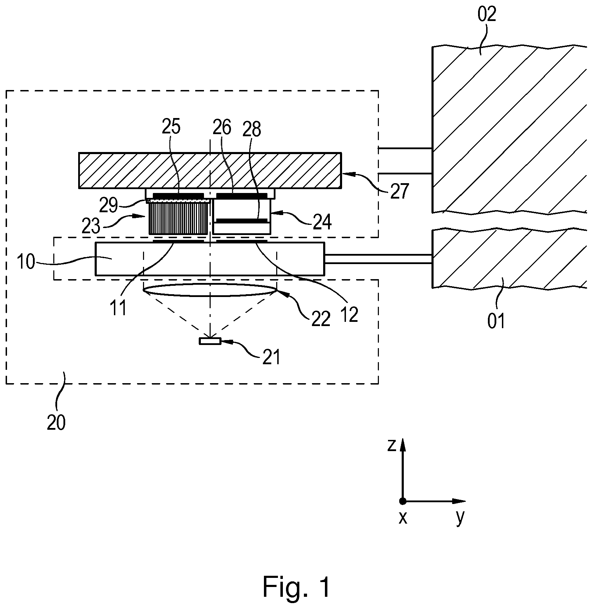

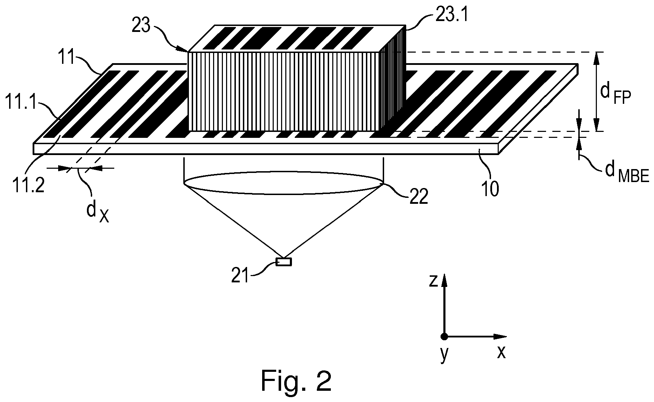

Eine schematisierte Schnittansicht eines Ausführungsbeispiels der erfindungsgemäßen Positionsmesseinrichtung ist in Figur 1 gezeigt; weitere Details dieser Vorrichtung sind in den folgenden Figuren 2 - 5 dargestellt. Anhand der verschiedenen Figuren wird nachfolgend das Ausführungsbeispiel erläutert.

Die erfindungsgemäße Positionsmesseinrichtung dient zur Bestimmung der Position eines ersten Objekts O1 gegenüber einem relativ hierzu entlang mindestens einer Messrichtung x beweglichen zweiten Objekt O2. Eines der Objekte O1, beispielsweise eine erste Maschinenkomponente, ist hierbei mit der sich entlang der Messrichtung x erstreckenden Maßverkörperung 10 der Positionsmesseinrichtung verbunden. Das andere Objekt O2, etwa eine zweite Maschinenkomponente, ist gegenüber der ersten Maschinenkomponente entlang der Messrichtung x beweglich und mit der Abtasteinheit 20 der Positionsmesseinrichtung verbunden. Im vorliegenden Ausführungsbeispiel ist eine Relativbewegung der beiden Objekte O1, O2 entlang einer linearen Messrichtung x vorgesehen, wobei die Messrichtung x in Figur 1 senkrecht zur Zeichenebene orientiert ist.

Mit Hilfe der erfindungsgemäßen Positionsmesseinrichtung lassen sich aus der optischen Abtastung der Maßverkörperung 10 positionsabhängige Signale bezüglich der Position der beiden zueinander beweglichen Objekte O1, O2 bzw. der entsprechenden Maschinenkomponenten erzeugen und an eine - nicht dargestellte - Folgeelektronik übertragen. Als Folgeelektronik kann z.B. eine übergeordnete Maschinensteuerung vorgesehen sein, die die positionsabhängigen Signale zur Positionierung der Maschinenkomponenten nutzt.

Die Maßverkörperung 10 besteht aus einem transparenten Trägersubstrat, beispielsweise aus Glas, auf dessen Oberseite im vorliegenden Ausführungsbeispiel zwei Messteilungen 11, 12 angeordnet sind. Die Messteilungen 11, 12 werden durch alternierend entlang der Messrichtung x angeordnete, rechteckförmige Teilungsbereiche 11.1, 11.2 mit unterschiedlichen optischen Eigenschaften gebildet, wie dies in Figur 2 für die erste Messteilung 11 erkennbar ist. Im erläuterten Ausführungsbeispiel sind lichtundurchlässige Teilungsbereiche 11.1 - beispielsweise aus Chrom - und lichtdurchlässige Teilungsbereiche 11.2 in der Messteilung 11 vorgesehen. Es ist in diesem Ausführungsbeispiel der erfindungsgemäßen Positionsmesseinrichtung somit eine Durchlicht-Abtastung der Messteilungen 11, 12 vorgesehen.

Wie aus der Detailansicht in Figur 2 ersichtlich, weist die erste Messteilung 11 eine aperiodische Codierung entlang der Messrichtung x auf, die zur Absolutpositionsbestimmung geeignet ist; nachfolgend sei diesbezüglich auch von einer absolutcodierten Messteilung bzw. einer Absolut-Messteilung die Rede. Die aperiodische Codierung dieser Messteilung 11 kann hierbei als Pseudo Random Code (PRC) ausgebildet sein.

Desweiteren ist im dargestellten Ausführungsbeispiel eine parallel zur Messteilung 11 angeordnete, zweite Messteilung 12 vorgesehen, die als Inkremental-Teilung bzw. inkrementale Messteilung ausgebildet ist und eine periodische Anordnung unterschiedlicher Teilungsbereiche entlang der Messrichtung x umfasst. Die inkrementale Messteilung 12 ist vorliegend als Amplitudengitter auf dem Trägersubstrat ausgebildet und weist periodisch alternierend angeordnete, lichtundurchlässige Teilungsbereiche und lichtdurchlässige Teilungsbereiche auf, die ebenfalls rechteckförmig ausgebildet sind.

Aus der optischen Abtastung der Absolut-Messteilung wird in der erfindungsgemäßen Positionsmesseinrichtung eine grobe Absolutpositionsinformation gewonnen, die mit der aus der optischen Abtastung der Inkremental-Teilung erhaltenen, hochauflösenden Inkrementalinformation verrechnet wird. Ausgangsseitig steht somit eine hochauflösende absolute Positionsinformation in Bezug auf die Position der beiden Objekte O1, O2 zur Verfügung bzw. entsprechende positionsabhängige Signale zur Weiterverarbeitung.

Auf Seiten der Abtasteinheit 20 sind in der erfindungsgemäßen Positionsmesseinrichtung die weiteren erforderlichen Komponenten zur optischen Durchlicht-Abtastung der Maßverkörperung 10 bzw. der beiden Messteilungen 11, 12 und zur Erzeugung der positionsabhängigen Signale angeordnet. Hierzu gehört die auf einer Seite der Maßverkörperung 10 angeordnete Lichtquelle 21, beispielsweise ausgebildet als LED (Light Emitting Diode), die Strahlung mit einer Wellenlänge von 850nm emittiert und hier zur Abtastung der beiden Messteilungen 11, 12 genutzt wird. Der Lichtquelle 21 ist in Strahlausbreitungsrichtung eine Kollimationsoptik 22 vorgeordnet, um die in Richtung der Maßverkörperung 10 emittierten Strahlenbündel der Lichtquelle 21 zu kollimieren. Auf der gegenüberliegenden Seite der Maßverkörperung 10 sind in der Abtasteinheit 20 weitere Komponenten angeordnet, die zur optischen Abtastung der beiden Messteilungen 11, 12 und zur Erzeugung der positionsabhängigen Signale dienen.

Zur Abtastung der als Absolut-Messteilung ausgebildeten Messteilung 11 ist eine Faseroptik-Anordnung 23 sowie eine Detektoranordnung 25 in Form einer Absolut-Detektoranordnung in der Abtasteinheit 20 angeordnet, wobei diese Detektoranordnung 25 aus einer entlang der Messrichtung x periodischen Anordnung einzelner Detektorelemente 25.1 besteht. Die Detektoranordnung 25 ist auf einem Trägerelement 27 platziert, beispielsweise auf einer geeigneten Platine oder Leiterplatte.

Für die Abtastung der als Inkremental-Teilung ausgebildeten, weiteren Messteilung 12 ist eine Abtastplatte 24 mit einem darin integrierten Abtastgitter 28 in Form eines Transmissions-Abtastgitters sowie eine weitere Detektoranordnung 26, ausgebildet als Inkremental-Detektoranordnung, in der Abtasteinheit 20 vorgesehen. Auch die Inkremental-Detektoranordnung ist auf dem Trägerelement 27 platziert. Vorzugsweise sind die Absolut-Detektoranordnung und die Inkremental-Detektoranordnung in einem Sensor-ASIC integriert, der auf dem Trägerelement 27 angeordnet ist. Im Sensor-ASIC kann bereits eine erste Verarbeitung der erfassten Signale erfolgen, bevor diese an eine Folgeelektronik zur übertragen werden.

Maßgeblich sind in der erfindungsgemäßen Positionsmesseinrichtung nunmehr verschiedene Maßnahmen im Zusammenhang mit der Abtastung der ersten Messteilung 11, die als Absolut-Messteilung ausgebildet ist. Diese Maßnahmen seien nachfolgend im Detail erläutert. Im Anschluss wird dann noch auf die Abtastung der in diesem Beispiel weiterhin vorgesehenen, zweiten Messteilung 12, ausgebildet als Inkremental-Messteilung, eingegangen.

Zur optischen Abtastung der absolutcodierten Messteilung 11 ist grundsätzlich eine Übertragung des aus der Wechselwirkung zwischen den von der Lichtquelle 21 emittierten Strahlenbündeln mit der Messteilung 11 resultierendem Lichtmuster in die Detektionsebene der Detektoranordnung 25 erforderlich. Das resultierende Lichtmuster ist bei der Abtastung der als Absolut-Messteilung ausgebildeten Messteilung 11 wegen deren aperiodischer Codierung ebenfalls aperiodisch. Mit $d_x$ wird im Folgenden die minimale Strukturbreite der aperiodischen Messteilung 11 bezeichnet.

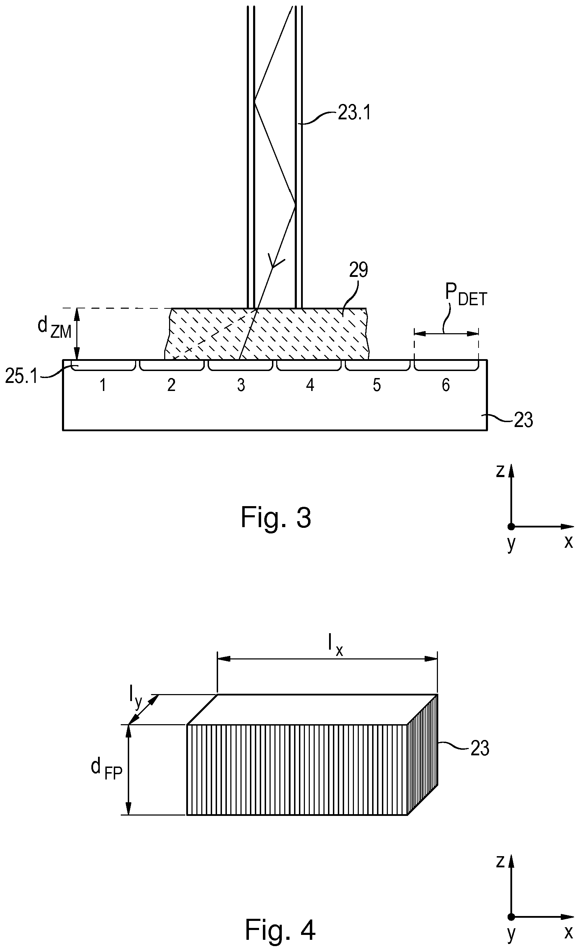

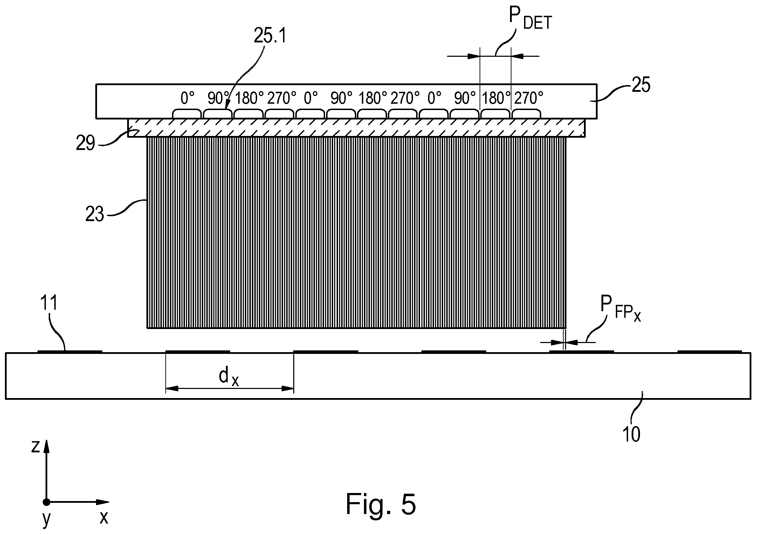

Die zur Abtastung der absolutcodierten Messteilung 11 vorgesehene Detektoranordnung 25 ist als Absolut-Detektoranordnung ausgebildet und besteht im vorliegenden Ausführungsbeispiel aus einer entlang der Messrichtung x periodischen Anordnung einzelner Detektorelemente 25.1, wie dies z.B. aus den Detail-Darstellungen in den Figuren 3 oder 5 ersichtlich ist. Hierbei sind die Detektorelemente 25.1 im Raster einer definierten Detektor-Periodizität entlang der Messrichtung x angeordnet, die nachfolgend mit $P_{DET}$ bezeichnet sei.

Zur Übertragung des Lichtmusters in die Detektionsebene der Detektoranordnung 25 dient vorliegend die Faseroptik-Anordnung 23, die als Faseroptik-Platte ausgebildet ist und aus einer Vielzahl aneinandergrenzend angeordneter Lichtleitfasern 23.1 besteht, wie dies etwa aus Figur 2 ersichtlich ist. In der Praxis umfassen derartige Faseroptik-Platten Bündel von Lichtleitfasern 23.1, die miteinander verschmolzen sind und zu einer planparallelen Platte geschnitten und geschliffen werden. Kommerziell erhältlich sind solche Faseroptik-Platten unter der Bezeichnung "Fiber Optic Faceplates" beispielsweise von der Fa. SCHOTT AG, Mainz.

Die Bildeintrittsflächen der einzelnen Lichtleitfasern 23.1 sind in der erfindungsgemäßen Positionsmesseinrichtung der Maßverkörperung 10 bzw. der abgetasteten Messteilung 11 zugewandt, die Bildaustrittsflächen der zugehörigen Detektoranordnung 25. Wie ebenfalls aus Figur 2 ersichtlich, weist die Faseroptik-Platte entlang der angegebenen z-Richtung eine Dicke $d_{FP}$ auf und besitzt einen rechteckförmigen Querschnitt, wobei sich die Rechtecks-Längsachse parallel zur Messrichtung x erstreckt.

Die Dicke $d_{FP}$ der Faseroptik-Platte 23 wird dabei bevorzugt im folgenden Bereich gewählt:

$$2 \cdot d_x < d_{FP} < d_x / 4 \cdot \rho \qquad \text{(Gl. 1)}$$

mit

$d_{FP}$:= Dicke der Faseroptik-Platte

$d_x$:= Teilungsperiode einer periodischen Messteilung oder minimale Strukturbreite einer aperiodischen Messteilung entlang der Messrichtung

$\rho$ := Verzerrungsfaktor der Faseroptik-Platte, der dem lateralen Versatz entspricht, der bei der Übertragung des Lichtmusters über die Faseroptik-Platte zwischen Bildeintrittsfläche und Bildaustrittsfläche relativ zur Faserlänge resultiert.

In Bezug auf die minimale Dicke $d_{FP}$ der Faseroptik-Platte ist vorteilhaft, wenn ein gewisser Minimal-Abstand zwischen den metallischen Chrom-Strukturen der Messteilung 11 und den empfindlichen Komponenten der Detektoranordnung 25 bzw. des entsprechenden ASICs eingehalten wird. Durch die Einhaltung eines derartigen Minimal-Abstands kann eine Beschädigung der Komponenten verhindert werden, wenn die metallischen Strukturen der Messteilung 11 sich im Betrieb evtl. elektrisch aufladen.

Im Hinblick auf die maximal zulässige Dicke $d_{FP}$ der Faseroptik-Platte ist zu berücksichtigen, dass dieses Bauteil üblicherweise eine umso stärkere Verzerrung des damit übertragenen Lichtmusters bewirkt, je größer dessen Dicke gewählt wird. Eine derartige Verzerrung resultiert aus der nicht vermeidbaren Verwindung und Verdrillung der Lichtleitfasern 23.1 bei der Herstellung der Faseroptik-Platte. Um demzufolge eine Übertragung eines möglichst verzerrungsfreien Lichtmusters über die Faseroptik-Platte zu gewährleisten, sollte eine bestimmte maximal zulässige Dicke $d_{FP}$ der Faseroptik-Platte nicht überschritten werden, die wie oben angegeben mit dem Verzerrungsfaktor p der jeweiligen Faseroptik-Platte zusammenhängt.

Bei typischen Werten für die minimale Strukturbreite $d_X = 220\mu m$ einer Messteilung 11, die als aperiodische Codespur ausgebildet ist, und einem Verzerrungsfaktor $p = 10\mu m/mm$ ergibt sich unter Verwendung der vorgenannten Gleichung 1 ein vorteilhafter Bereich für die Dicke $d_{FP}$ der Faseroptik-Platte zwischen $440\mu m$ und 5.5mm. Übliche Werte für die Länge $I_x$ der Faseroptik-Platte entlang der Messrichtung x und die Länge $I_y$ der Faseroptik-Platte senkrecht hierzu betragen $I_x = 5 - 10mm$ und $I_y = 1 - 3mm$.

Mit Hilfe der Faseroptik-Platte erfolgt somit die Übertragung des eingangsseitigen Lichtmusters vorzugsweise im Übertragungsverhältnis 1:1 bzw. mit dem Abbildungsmaßstab A = 1 in die Detektionsebene der Detektoranordnung 25. Es resultiert hierbei möglichst keine Vergrößerung, Verkleinerung oder aber Verzerrung des Lichtmusters, das zur Erzeugung positionsabhängiger Signale genutzt wird.

Im dargestellten Ausführungsbeispiel wird die Faseroptik-Platte nur zur Abtastung der absolutcodierten Messteilung 11 verwendet bzw. nur zur Übertragung des aperiodischen Lichtmusters in die Detektionsebene der Detektoranordnung 25. Zur Abtastung der inkrementalen Messteilung 12 auf der Maßverkörperung wird vorliegend ein - nachfolgend noch zu erläuterndes - Abtastverfahren verwendet, das keine derartige Faseroptik-Platte erfordert. Es sei an dieser Stelle ausdrücklich darauf hingewiesen, dass die Faseroptik-Platte grundsätzlich auch zur Abtastung einer Messteilung mit einer periodischen Inkremental-Teilung genutzt werden könnte. In diesem Fall würde die Größe $d_x$ aus obiger Gleichung 1 dann anstelle der minimalen Strukturbreite die Teilungsperiode der abgetasteten inkrementalen Messteilung bezeichnen.

Als vorteilhaft im Hinblick auf die Anordnung der Faseroptik-Platte relativ zur Messteilung 11 erweist sich desweiteren, wenn der Abstand $d_{MBE}$ zwischen der Messteilung 11 und der Bildeintrittsfläche der Faseroptik-Platte gemäß

$$d_{MBE} \leq 200\mu m \qquad (Gl. 2)$$

gewählt wird. Durch einen möglichst kleinen Abstand $d_{MBE}$ wird bewirkt, dass ggf. vorhandene, tropfenförmige Verschmutzungen auf der Messteilung 11 in ihrer Höhe und damit in ihrer störenden Wirkung auf die optische Abtastung reduziert werden. Daher ist vorzugsweise $d_{MBE} \leq 100\mu m$ und idealerweise $d_{MBE} \leq 50\mu m$ zu wählen.

Als weiterer Design-Parameter steht auf Seiten der Faseroptik-Anordnung 23 bzw. der Faseroptik-Platte ferner noch die Faseroptik-Periodizität zur Verfügung, also das Raster, in dem die einzelnen Lichtleitfasern 23.1 angeordnet sind. Hierbei sei zunächst nur die Periodizität der Anordnung der Lichtleitfasern 23.1 entlang der Messrichtung x betrachtet; in diesem Zusammenhang ist nachfolgend von der ersten Faseroptik-Periodizität $P_{FP_x}$ die Rede. In Bezug auf die erste Faseroptik-Periodizität $P_{FP_x}$ erweist sich dabei als vorteilhaft, wenn diese gemäß

$$P_{FP_x} \leq P_{DET} \qquad (Gl. 3)$$

gewählt wird, mit

$P_{FP_x}$ := erste Faseroptik-Periodizität entlang der Messrichtung x
$P_{DET}$ := Detektor-Periodizität entlang der Messrichtung x

Die erste Faseroptik-Periodizität $P_{FP_x}$ entlang der Messrichtung x sollte demzufolge möglichst kleiner gleich der Detektor-Periodizität $P_{DET}$ entlang der Messrichtung x gewählt werden, wie dies z.B. aus der Detail-Darstellung der Figur 5 ersichtlich ist. Bei Einhaltung dieser Vorschrift ist gewährleistet, dass eine gute bzw. kontrastreiche Übertragung der Kanten im Lichtmuster in die Detektionsebene erfolgt.

Die zu wählende Detektor-Periodizität $P_{DET}$ hängt dabei grundsätzlich davon ab, von welcher Art die abgetastete Messteilung und damit das zu übertragende Lichtmuster ist.

So ist etwa im Fall einer absolutcodierten Messteilung in Manchestercodierung vorteilhaft, wenn zur Abtastung eines Bits des entsprechenden Pseudo Random Codes insgesamt acht Detektorelemente 25.1 verwendet werden. Bei einer minimalen Strukturbreite bzw. Bitbreite $d_x$ ergibt sich die erforderliche Detektorperiodizität dann gemäß $P_{DET}$ = $d_x/8$. Für die erste Faseroptik-Periodizität $P_{FPx}$ folgt dann mit Gleichung 3 somit $P_{FPx} \leq d_x/8$. Bei einer abgetasteten absolutcodierten Messteilung mit einer gegebenen minimalen Strukturbreite bzw. Bitbreite $d_x = 220\mu m$ resultiert damit eine erforderliche Detektorperiodizität $P_{DET} = 27.5\mu m$; für die erste Faseroptik-Periodizität $P_{FPx}$ gilt somit $P_{FPx} \leq 27.5\mu m$.

Wird die Faseroptik-Anordnung 23 bzw. Faseroptik-Platte dagegen zur Abtastung einer inkrementalen Messteilung und damit zur Übertragung eines periodischen Lichtmusters eingesetzt, so folgt im Beispiel mit vier erforderlichen Detektorelementen pro Periode $d_x$ des Lichtmusters dann für die Detektorperiodizität $P_{DET} = d_x/4$. Die erste Faseroptik-Periodizität $P_{FPx}$ ergibt sich mit Gleichung 3 zu $P_{FPx} \leq d_x/4$. Im Fall einer abgetasteten inkrementalen Messteilung mit einer Periodizität $d_x$ des Lichtmusters von $d_x = 40\mu m$ resultiert damit eine erforderliche Detektorperiodizität $P_{DET}$ = $10\mu m$; für die erste Faseroptik-Periodizität $P_{FPx}$ gilt somit $P_{FPx} \leq 10\mu m$.

Die Faseroptik-Platte besitzt im dargestellten Ausführungsbeispiel wie oben erwähnt einen rechteckförmigen Querschnitt. Dies bedeutet, dass als weiterer Design-Parameter für dieses Bauteil noch eine Faseroptik-Periodizität entlang einer Richtung y zur Verfügung steht, die senkrecht zur Messrichtung x orientiert ist. Im Folgenden sei im Zusammenhang mit dieser Größe von einer zweiten Faseroptik-Periodizität $P_{FPy}$ die Rede. Hierbei erweist sich grundsätzlich als vorteilhaft, wenn die zweite Faseroptik-Periodizität $P_{FPy}$ identisch zur ersten Faseroptik-Periodizität $P_{FPx}$ gewählt wird, d.h.

$$P_{FPy} = P_{FPx} \qquad \text{(Gl. 4)}$$

mit

$P_{FPx}$ := erste Faseroptik-Periodizität entlang der Messrichtung
$P_{FPy}$ := zweite Faseroptik-Periodizität entlang einer Richtung senkrecht zur Messrichtung.

In der erfindungsgemäßen Positionsmesseinrichtung ist im Bereich zwischen der Bildaustrittsfläche der Faseroptik-Platte und der Detektoranordnung 25 ein Zwischenraum-Medium 29 angeordnet, wie dies etwa insbesondere aus den Detail-Darstellungen der Figuren 3 und 5 ersichtlich ist. Über das Zwischenraum-Medium 29 ist dabei insbesondere sichergestellt, dass die aus der Bildaustrittsfläche der Faseroptik-Platte austretenden Strahlenbündel auf ihrem Weg zur Detektoranordnung 25 eine geringere Ablenkung erfahren als im Fall ohne Zwischenraum-Medium. Dieser Zusammenhang ist in der Detailansicht der Figur 3 veranschaulicht, die das bildaustrittsseitige Ende einer einzelnen Lichtleitfaser 23.1 der Faseroptik-Platte 23, das Zwischenraum-Medium 29 und die Detektoranordnung 25 mit den einzelnen lichtempfindlichen Detektorelementen 25.1 zeigt. Wie aus dieser Darstellung ersichtlich, resultiert für das von oben her einfallende Strahlenbündel im Zwischenraum-Medium 29 eine nur geringe Ablenkung von der ursprünglichen Strahlrichtung (durchgezogener Strahl). Strichliniert ist links vom nur gering abgelenkten Strahlenbündel der Fall dargestellt, wenn im Bereich zwischen der Bildaustrittsfläche und der Detektoranordnung 25 kein Zwischenraum-Medium angeordnet wäre und demzufolge dann eine deutliche Ablenkung des Strahlenbündels in diesem Bereich resultieren würde. Eine derartige Ablenkung würde bewirken, dass das Strahlenbündel dann nicht auf das Detektorelement 25.1 mit der angegebenen Nummer 3 fallen würde wie im unabgelenkten Fall, sondern auf das links davon befindliche Detektorelement 25.1 mit der Nummer 2. Für die Übertragung des Lichtmusters hätte dies zur Folge, dass das über die Detektoranordnung 25 erfasste Lichtmusterbild deutlich weniger kontrastreich wäre und sich damit eine schlechtere Signalqualität bei der Abtastung der zugehörigen Messteilung 11 ergeben würde.

Das Ausfüllen des Bereichs zwischen der Bildaustrittsfläche der Faseroptik-Anordnung 23 in Form der Faseroptik-Platte und der Detektoranordnung 25 mit einem geeigneten Zwischenraum-Medium hat den weiteren positiven Effekt, dass damit die Anzahl von Brechungsindex-Sprüngen in diesem Bereich verringert werden kann. Dadurch resultieren weniger Reflexionen an Grenzflächen und damit auch weniger Streulicht; ansonsten erforderliche, aufwändige Reflexionsschichten können somit entfallen.

Als Zwischenraum-Medium 29 kommt bevorzugt ein transparentes Material in Betracht, dessen Brechungsindex $n_{ZM}$ etwa im Bereich $1.3 < n_{ZM} < 2.3$ liegt. Grundsätzlich wird bei der Auswahl eines geeigneten Materials für das Zwischenraum-Medium 29 versucht, ein Material zu wählen, dessen Brechungsindex möglichst gut an den Brechungsindex $n_{FK}$ des Faserkerns der Lichtleitfasern 23.1 aus der Faseroptik-Platte und an den Brechungsindex $n_{DET}$ der Detektoranordnung 25 angepasst ist. Besonders geringe Reflexionen erhält man etwa, wenn

$$n_{ZM} = \sqrt{n_{FK} \bullet n_{DET}} \qquad \text{(Gl. 5)}$$

gewählt wird, mit

$n_{ZM}$ := Brechungsindex des Zwischenraum-Mediums
$n_{FK}$ := Brechungsindex des Faserkerns
$n_{DET}$ := Brechungsindex der Detektoranordnung

Geeignet hierzu ist beispielsweise ein Klebstoff, der einen Brechungsindex $n_{ZM}$ im geeigneten Bereich besitzt. Wird ein Klebstoff als Zwischenraum-Medium 29 verwendet, so wird damit auch die Faseroptik-Platte gegenüber der Detektoranordnung 25 fixiert.

Im Hinblick auf die Dicke $d_{ZM}$ des Zwischenraum-Mediums 29 erweist sich als vorteilhaft wenn diese Dicke $d_{ZM}$ im Bereich

$$5\mu m < d_{ZM} < 100\mu m \qquad (Gl.\ 6)$$

gewählt wird.

Die maximale Dicke $d_{ZM}$ des Zwischenraum-Mediums 29 ist begrenzt durch das optische Übersprechen von einer Lichtleitfaser 23.1 auf benachbarte Detektorelemente 25.1 der Detektoranordnung 25. Mit Hilfe der nachfolgenden Betrachtung lässt sich die maximale Dicke $d_{ZM}$ des Zwischenraum-Mediums 29 bei Vermeidung eines derartigen Übersprechens abschätzen. So wird davon ausgegangen, dass das einfallende Licht nicht senkrecht auf die Bildeintrittsfläche einer Lichtleitfaser 23.1 trifft, sondern unter einem Einfallswinkel y, der durch die Breite w der verwendeten Lichtquelle 21 und die Brennweite f der Kollimationsoptik 22 gemäß w/2f gegeben ist. Der Brechungsindex $n_{ZM}$ des Zwischenraum-Mediums 29 sei ferner an den Brechungsindex $n_{FK}$ des Faserkerns angepasst. Das aus der Bildaustrittsfläche austretende Licht fällt dann unter einem Ausfallswinkel y' = w/2f auf die Detektoranordnung 25, wobei ein lateraler Versatz $x_d$ gegenüber dem senkrechten Auftreffen auf die Detektoranordnung 25 resultiert. Über die geeignete Wahl der Dicke $d_{ZM}$ des Zwischenraum-Mediums 29 wird versucht, den Versatz $x_d$ möglichst klein zu halten. Wenn ferner für eine möglichst kontrastreiche Lichtübertragung $x_d \leq P_{DET}$ gefordert wird und $x_d = y' \cdot d_{ZM}$ gilt, dann ergibt sich für die Dicke $d_{ZM}$ des Zwischenraum-Mediums 29 die nachfolgende Beziehung:

$$d_{ZM} \leq \frac{1}{\arcsin\left(\dfrac{1}{n_{FK}} \cdot \sin\gamma\right)} \cdot \frac{P_{DET}}{10} \qquad (Gl.\ 7)$$

mit

$d_{ZM}$ := Dicke des Zwischenraum-Mediums
$n_{FK}$ := Brechungsindex des Faserkerns
y := Einfallswinkel auf die Bildeintrittsfläche
$P_{DET}$:= Detektor-Periodizität entlang der Messrichtung x

Der Einfallswinkel auf die Bildeintrittsfläche bzw. die Größe y kann dabei je nach den Systemgegebenheiten variieren. So kann etwa y der maximale Divergenzwinkel und damit gemäß y = w/2f gegeben sein. Sollen mit Hilfe der Faseroptik-Platte sehr feine Lichtmuster übertragen werden, also beispielsweise eine Inkremental-Teilung, so ergibt sich wegen der Beugung an den feinen Gitterstrukturen die Größe y gemäß y = λ/$d_x$; hierbei bezeichnet λ die Lichtwellenlänge und $d_x$ die Teilungsperiode der Inkremental-Teilung. Weiterhin kann y auch der Einfallswinkel des kollimierten Lichts sein und damit dem Beleuchtungswinkel entsprechen.

Mit den bei senkrechter Beleuchtung auf die Maßverkörperungsebene (y = w/2f) typisch gewählten Parametern w = 0.3mm, f = 6.5mm, $n_{FK}$ = 1.8 und $P_{DET}$ = 27.5µm ergibt sich über die Gleichung 7 dann eine maximale Dicke $d_{ZM}$ des Zwischenraum-Mediums 29 gemäß $d_{ZM} \leq 215\mu m$. Vorteilhafterweise wählt man demzufolge $d_{ZM} \leq 200\mu m$, idealerweise wie in Gleichung 6 angeführt $d_{ZM} \leq 100\mu m$.

Die minimale Dicke $d_{ZM}$ des Zwischenraum-Mediums 29 wird begrenzt durch die auftretenden mechanischen Spannungen, die bei kleinen Dicken $d_{ZM}$ des Zwischenraum-Mediums 29 zwischen der Faseroptik-Platte und der Detektoranordnung 25 deutlich ansteigen. Derartige mechanische Spannungen resultieren in diesem Bereich aufgrund der unterschiedlichen thermischen Ausdehnungskoeffizienten zwischen den verschiedenen Materialien, also üblicherweise zwischen Silizium (Detektoranordnung 25) und Glas (Faseroptik-Platte). Die Dicke des Zwischenraum-Medium 29 sollte demzufolge so gewählt werden, dass die mechanischen Spannungen zwischen Detektoranordnung 25 und Faseroptik-Platte über die geringe Steifigkeit des Zwischenraum-Mediums 29 begrenzt werden, um eine Beschädigung in diesem Bereich auszuschließen.

Wie bereits oben erwähnt, ist im dargestellten Ausführungsbeispiel der erfindungsgemäßen optischen Positionsmesseinrichtung neben der Abtastung einer absolutcodierten Messteilung 11 auch eine Abtastung einer inkrementalen Messteilung 12 vorgesehen. Über die Inkremental-Abtastung werden hochauflösende Positionsinformationen bezüglich einer Relativbewegung der beiden zueinander beweglichen Objekte O1, O2 entlang der Messrichtung x erzeugt, die dann mit den gröber auflösenden Positionsinformationen aus der Abtastung der Absolut-Messteilung verrechnet werden. Die inkrementale Messteilung 12 ist herbei als Amplitudengitter ausgebildet und besteht aus einer entlang der Messrichtung x periodischen Anordnung von lichtdurchlässigen und lichtundurchlässigen Teilungsbereichen. Die Periodizität bzw. Teilungsperiode der inkrementalen Messteilung 12 sei nachfolgend nunmehr mit $d_1$ bezeichnet.

Wie aus Figur 1 ersichtlich, ist zur Abtastung der inkrementalen Messteilung 12 in der Abtasteinheit 20 ferner eine Abtastplatte 24 mit einem darin integrierten Abtastgitter 28 in Form eines Transmissions-Abtastgitters mit einer Teilungsperiode $d_2$ sowie eine weitere Detektoranordnung 26, ausgebildet als Inkremental-Detektoranordnung vorgesehen. Aus der Wechselwirkung der die Messteilung 12 passierenden Lichtstrahlen mit dem Abtastgitter 28 resultiert in der Detektionsebene der Detektoranordnung 26 ein periodisches Lichtmuster mit der Periodizität $d_3$, das dort mittels einer periodischen Anordnung von Detektorelementen erfasst wird. Die Detektoranordnung 26 zur Inkrementalsignal-Erzeugung ist hierbei als sogenannter strukturierter Photodetektor ausgebildet, der eine Mehrzahl von periodisch entlang der Messrichtung x angeordneten Detektorelementen umfasst.

Für die verschiedenen geometrischen Größen dieser Abtastung gelten die nachfolgenden Beziehungen für den Fall eines Transmissions-Abtastgitters in Form eines Amplitudengitters oder eines Phasengitters mit näherungsweise 90° Phasenhub:

$$d_1 = d_2 \cdot (u + v) / v \qquad \text{(Gl. 8.1)}$$

$$d_3 = d_2 \cdot (u + v) / u \qquad \text{(Gl. 8.2)}$$

mit

$d_1$ := Teilungsperiode der Inkremental-Teilung
$d_2$ := effektive Teilungsperiode des Abtastgitters
$d_3$ := Periodizität des in der Detektionsebene resultierenden Lichtmusters
$u$ := Abstand zwischen Inkremental-Teilung und Abtastgitter
$v$ := Abstand zwischen Abtastgitter und Detektionsebene.

Wird ein Transmissions-Abtastgitter in Form eines Phasengitters mit 180° Phasenhub verwendet, so stellt in Gleichung 8.2 die Teilungsperiode $d_2$ die effektive Teilungsperiode dar, die durch $d_2 = 2 \cdot d_{2P}$ gegeben ist, wobei $d_{2P}$ die tatsächliche Teilungsperiode des Phasengitters angibt.

Im Hinblick auf das verwendete Abtastprinzip für die Inkrementalsignalerzeugung sei auch auf die Veröffentlichung von R. Pettigrew mit dem Titel "Analysis of Grating Imaging and its Application to Displacement Metrology" in SPIE Vol. 36, 1st European Congress on Optics applied to Metrology (1977), S. 325 - 332 verwiesen.

Neben dem konkret beschriebenen Ausführungsbeispiel existieren im Rahmen der vorliegenden Erfindung selbstverständlich noch weitere Ausgestaltungsmöglichkeiten.

So ist keinesfalls zwingend, dass die abgetastete Maßverkörperung zwei Messteilungen aufweist, es kann beispielsweise auch lediglich eine Messteilung in einer entsprechenden Spur auf einem Trägersubstrat angeordnet sein, etwa eine einzige absolut-codierte Messteilung.

Ebenfalls ist es möglich, eine inkrementale Messteilung und eine absolut-codierte Messteilung zu einer gemeinsamen Messteilung zu kombinieren, indem z.B. einzelne Teilungsbereiche der inkrementalen Messteilung weggelassen werden, um so eine Absolutcodierung aufzuprägen.

Desweiteren können natürlich nicht nur Positionsmesseinrichtungen zur Erfassung linearer Relativbewegungen erfindungsgemäß ausgebildet werden, ebenso können Positionsmesseinrichtungen zur Erfassung rotatorischer Relativbewegungen entsprechend optimiert werden.

Ferner kann die abgetastete Messteilung auch in Form eines Phasengitters ausgebildet sein, dessen Phasenhub entweder 90° oder aber 180° beträgt.

Möglich ist desweiteren, dass eine Faseroptik-Platte eingesetzt wird, die diejenigen Lichtanteile absorbiert und unterdrückt, die nicht in den einzelnen Lichtleitfasern geführt wird. Derartige unerwünschte Lichtanteile können bei einem nicht zu vermeidenden Lichteinfall zwischen den Lichtleitfasern entstehen oder aber bei sehr stark geneigten Lichtstrahlen, die nicht innerhalb der numerischen Apertur der Lichtleitfasern liegen. Eine solche Absorption unerwünschter Lichtanteile kann durch ein absorbierendes Glasmedium zwischen den Lichtleitfasern sichergestellt werden, das Licht absorbiert, welches nicht zur Signalerzeugung beiträgt. Störendes Streulicht lässt sich auf diese Art und Weise besonders gut unterdrücken.

**Patentansprüche**

1. Optische Positionsmesseinrichtung zur Bestimmung der Position eines ersten Objekts (O1) gegenüber einem relativ hierzu entlang mindestens einer Messrichtung (x) beweglichen zweiten Objekt (O2) mit

   - einer sich entlang der Messrichtung (x) erstreckenden Maßverkörperung (10), die mit dem ersten Objekt (O1) verbunden ist und mindestens eine Messteilung (11) umfasst, die aus alternierend entlang der Messrichtung (x) angeordneten Teilungsbereichen (11.1, 11.2) mit unterschiedlichen optischen Eigenschaften besteht, und
   - einer Abtasteinheit (20), die mit dem zweiten Objekt (O2) verbunden ist und mindestens eine Lichtquelle (21), eine Detektoranordnung (25) sowie mindestens eine Faseroptik-Anordnung (23) umfasst, die aus einer Vielzahl aneinandergrenzend angeordneter Lichtleitfasern (23.1) besteht, deren Bildeintrittsflächen der Maßverkörperung (10) und deren Bildaustrittsflächen der Detektoranordnung (25) zugewandt sind,
   - wobei aus der Wechselwirkung zwischen den von der Lichtquelle (21) emittierten Strahlenbündeln mit der Messteilung (11) ein Lichtmuster resultiert und die Faseroptik-Anordnung (23) das Lichtmuster in eine Detektionsebene der Detektoranordnung (25) überträgt,

   **dadurch gekennzeichnet,**
   **dass** die Faseroptik-Anordnung (23) als Faseroptik-Platte ausgebildet und zwischen der Bildaustrittsfläche der Faseroptik-Platte und der Detektoranordnung (25) ein Zwischenraum-Medium (29) angeordnet ist, welches sicherstellt, dass die aus der Bildaustrittsfläche austretenden Strahlenbündel auf ihrem Weg zur Detektoranordnung (25) eine geringere Ablenkung erfahren als im Fall ohne Zwischenraum-Medium (29).

2. Optische Positionsmesseinrichtung nach Anspruch 1, **dadurch gekennzeichnet, dass** das Zwischenraum-Medium (29) einen Brechungsindex ($n_{ZM}$) im Bereich

$$1.3 < n_{ZM} < 2.3$$

   aufweist, mit $n_{ZM}$ := Brechungsindex des Zwischenraum-Mediums.

3. Optische Positionsmesseinrichtung nach Anspruch 1 oder 2, **dadurch gekennzeichnet, dass** die Dicke ($d_{ZM}$) des Zwischenraum-Mediums (29) im Bereich

$$5\mu m < d_{ZM} < 100\mu m$$

   liegt, mit $d_{ZM}$:= Dicke des Zwischenraum-Mediums.

4. Optische Positionsmesseinrichtung nach mindestens einem der vorhergehenden Ansprüche, **dadurch gekennzeichnet, dass** ein Klebstoff als Zwischenraum-Medium (29) vorgesehen ist.

5. Optische Positionsmesseinrichtung nach mindestens einem der vorhergehenden Ansprüche, **dadurch gekennzeichnet, dass** die Dicke ($d_{FP}$) der Faseroptik-Platte im Bereich

$$2 \cdot d_x < d_{FP} < d_x / 4 \cdot \rho$$

   liegt, mit

   $d_{FP}$ := Dicke der Faseroptik-Platte
   $d_x$:= Teilungsperiode einer periodischen Messteilung oder minimale Strukturbreite einer aperiodischen Messteilung entlang der Messrichtung
   $\rho$ := Verzerrungsfaktor der Faseroptik-Platte, der dem lateralen Versatz entspricht, der bei der Übertragung des Lichtmusters über die Faseroptik-Platte zwischen Bildeintrittsfläche und Bildaustrittsfläche relativ zur Faserlänge resultiert.

6. Optische Positionsmesseinrichtung nach mindestens einem der vorhergehenden Ansprüche, **dadurch gekennzeichnet, dass**

- die Detektoranordnung (25) aus einer entlang der Messrichtung (x) periodischen Anordnung einzelner Detektorelemente (25.1) im Raster einer definierten Detektor-Periodizität ($P_{DET}$) besteht und
- die Lichtleitfasern (23.1) in der Faseroptik-Platte entlang der Messrichtung (x) in einem periodischen Raster mit einer ersten Faseroptik-Periodizität ($P_{FPx}$) angeordnet sind, für die

$$P_{FPx} \leq P_{DET}$$

gilt, mit

$P_{FPx}$ := erste Faseroptik-Periodizität entlang der Messrichtung x
$P_{DET}$ := Detektor-Periodizität entlang der Messrichtung x

7. Optische Positionsmesseinrichtung nach Anspruch 6, **dadurch gekennzeichnet, dass** die Lichtleitfasern (23.1) in der Faseroptik-Platte entlang einer Richtung (y) senkrecht zur Messrichtung (x) in einem periodischen Raster mit einer zweiten Faseroptik-Periodizität ($P_{FPy}$) angeordnet sind, für die

$$P_{FPy} = P_{FPx}$$

gilt, mit

$P_{FPx}$ := erste Faseroptik-Periodizität entlang der Messrichtung
$P_{FPy}$ := zweite Faseroptik-Periodizität entlang einer Richtung senkrecht zur Messrichtung

8. Optische Positionsmesseinrichtung nach mindestens einem der vorhergehenden Ansprüche, **dadurch gekennzeichnet, dass** für den Abstand ($d_{MBE}$) zwischen der Messteilung (11) und der Bildeintrittsfläche der Faseroptik-Platte

$$d_{MBE} \leq 200\mu m$$

gilt, mit $d_{MBE}$ := Abstand zwischen der Messteilung und der Bildeintrittsfläche.

9. Optische Positionsmesseinrichtung nach mindestens einem der vorhergehenden Ansprüche, **dadurch gekennzeichnet, dass** die Faseroptik-Platte einen rechteckförmigen Querschnitt aufweist, wobei sich die Rechtecks-Längsachse parallel zur Messrichtung (x) erstreckt

10. Optische Positionsmesseinrichtung nach mindestens einem der vorhergehenden Ansprüche **dadurch gekennzeichnet, dass** in der Faseroptik-Platte zwischen den Lichtleitfasern ein Glasmedium angeordnet ist, das Licht absorbiert, welches nicht zur Signalerzeugung beiträgt.

11. Optische Positionsmesseinrichtung nach mindestens einem der vorhergehenden Ansprüche, **dadurch gekennzeichnet, dass** die Messteilung (11) als Absolut-Messteilung ausgebildet ist, die eine aperiodische Codierung zur Absolutpositionsbestimmung aufweist und die Detektoranordnung (25) als Absolut-Detektoranordnung zur Erfassung des von der Absolut-Messteilung übertragenen aperiodischen Lichtmusters ausgebildet ist.

12. Optische Positionsmesseinrichtung Anspruch 11, **dadurch gekennzeichnet, dass** auf der Maßverkörperung (10) parallel zur Absolut-Messteilung eine weitere Messteilung (12) in Form einer Inkremental-Teilung angeordnet ist, aus deren optischer Abtastung ein periodisches Lichtmuster in der Detektionsebene resultiert, welches dort über eine Inkremental-Detektoranordnung (26) erfassbar ist.

13. Optische Positionsmesseinrichtung nach Anspruch 11, **dadurch gekennzeichnet, dass** die Inkremental-Teilung als Amplitudengitter ausgebildet ist und zur optischen Abtastung der Inkremental-Teilung ein Abtastgitter (28) zwischen der Inkremental-Teilung und der Inkremental-Detektoranordnung (26) angeordnet ist, das als Transmissions-Abtastgitter oder als Phasengitter ausgebildet ist.

14. Optische Positionsmesseinrichtung nach Anspruch 13, **dadurch gekennzeichnet, dass** für die Teilungsperiode ($d_1$) der Inkremental-Teilung und die Periodizität ($d_3$) des resultierenden Lichtmusters in der Detektionsebene die Beziehungen

$$d_1 = d_2 \cdot (u + v) / v$$

$$d_3 = d_2 \cdot (u + v) / u$$

gelten, mit

$d_1$ := Teilungsperiode der Inkremental-Teilung
$d_2$ := effektive Teilungsperiode des Abtastgitters
$d_3$ := Periodizität des in der Detektionsebene resultierenden Lichtmusters
u := Abstand zwischen Inkremental-Teilung und Abtastgitter
v := Abstand zwischen Abtastgitter und Detektionsebene.

**Claims**

1. Optical position measuring device for determining the position of a first object (O1) in relation to a second object (O2) that is movable relative thereto along at least one measurement direction (x), having

   - a material measure (10) extending along the measurement direction (x), said material measure being connected to the first object (01) and comprising at least one measurement graduation (11), which consists of graduation regions (11.1, 11.2) with different optical properties that are arranged alternately along the measurement direction (x), and
   - a scanning unit (20), which is connected to the second object (O2) and which comprises at least one light source (21), a detector arrangement (25) and at least one fibre-optic arrangement (23) which consists of a multiplicity of optical fibres (23.1) that are arranged adjacent to one another, the image entry faces of which facing the material measure (10) and the image exit faces of which facing the detector arrangement (25),
   - wherein a light pattern results from the interaction between the beams emitted by the light source (21) and the measurement graduation (11), and the fibre-optic arrangement (23) transmits the light pattern into a detection plane of the detector arrangement (25),

   **characterized**
   **in that** the fibre-optic arrangement (23) is embodied as a fibre-optic plate and an interstice medium (29) is arranged between the image exit face of the fibre-optic plate and the detector arrangement (25), said interstice medium ensuring that the beams emerging from the image exit face experience a lesser deflection on their path to the detector arrangement (25) than in the case without an interstice medium (29).

2. Optical position measuring device according to Claim 1, **characterized in that** the interstice medium (29) has a refractive index ($n_{ZM}$) in the range

$$1.3 < n_{ZM} < 2.3,$$

   where $n_{ZM}$ := refractive index of the interstice medium.

3. Optical position measuring device according to Claim 1 or 2, **characterized in that** the thickness ($d_{ZM}$) of the interstice medium (29) lies in the range

$$5 \ \mu m \ < \ d_{ZM} \ < \ 100 \ \mu m,$$

where $d_{ZM}$ = thickness of the interstice medium.

**4.** Optical position measuring device according to at least one of the preceding claims, **characterized in that** an adhesive is provided as interstice medium (29) .

**5.** Optical position measuring device according to at least one of the preceding claims, **characterized in that** the thickness ($d_{FP}$) of the fibre-optic plate lies in the range

$$2 \cdot d_x \ < \ d_{FP} \ < \ d_x / 4 \cdot \rho,$$

where

$d_{FP}$ := thickness of the fibre-optic plate
$d_x$ := graduation period of a periodic measurement graduation or minimum structure width of an aperiodic measurement graduation along the measurement direction
$\rho$ := distortion factor of the fibre-optic plate, which corresponds to the lateral offset resulting during the transmission of the light pattern over the fibre-optic plate between the image entry face and the image exit face relative to the fibre length.

**6.** Optical position measuring device according to at least one of the preceding claims, **characterized in that**

- the detector arrangement (25) consists of an arrangement, periodic along the measurement direction (x), of individual detector elements (25.1) in a grid with a defined detector periodicity ($P_{DET}$) and
- the optical fibres (23.1) in the fibre-optic plate are arranged along the measurement direction (x) in a periodic grid with a first fibre optics periodicity ($P_{FPx}$), for which the following applies:

$$P_{FPx} \ \leq \ P_{DET},$$

where:

$P_{FPX}$ := first fibre optics periodicity along the measurement direction x
$P_{DET}$ := detector periodicity along the measurement direction x.

**7.** Optical position measuring device according to Claim 6, **characterized in that** the optical fibres (23.1) in the fibre-optic plate are arranged in a periodic grid with a second fibre optics periodicity ($P_{FPy}$) along a direction (y) perpendicular to the measurement direction (x), the following applying to said second fibre optics periodicity:

$$P_{FPy} = P_{FPx} \quad ,$$

where:

$P_{FPx}$ := first fibre optics periodicity along the measurement direction
$P_{FPy}$ := second fibre optics periodicity along a direction perpendicular to the measurement direction.

**8.** Optical position measuring device according to at least one of the preceding claims, **characterized in that** the following applies to the distance ($d_{MBE}$) between the measurement graduation (11) and the image entry face of the fibre-optic plate:

$$d_{MBE} \ \leq \ 200 \ um,$$

where $d_{MBE}$ := distance between the measurement graduation and the image entry face.

9. Optical position measuring device according to at least one of the preceding claims, **characterised in that** the fibre-optic plate has a rectangular cross section, wherein the rectangle longitudinal axis extends parallel to the measurement direction (x).

10. Optical position measuring device according to at least one of the preceding claims, **characterized in that** a glass medium that absorbs light not contributing to the signal generation is arranged in the fibre-optic plate between the optical fibres.

11. Optical position measuring device according to at least one of the preceding claims, **characterized in that** the measurement graduation (11) is embodied as an absolute measurement graduation, which has aperiodic encoding for determining the absolute position, and the detector arrangement (25) is embodied as an absolute detector arrangement for capturing the aperiodic light pattern transmitted by the absolute measurement graduation.

12. Optical position measuring device according to Claim 11, **characterized in that** a further measurement graduation (12) in the form of an incremental graduation is arranged on the material measure (10) parallel to the absolute measurement graduation, a periodic light pattern resulting in the detection plane from the optical scanning of said incremental graduation, said periodic light pattern being capturable there by way of an incremental detector arrangement (26).

13. Optical position measuring device according to Claim 11, **characterized in that** the incremental graduation is embodied as an amplitude grating and a scanning grating (28) for optical scanning of the incremental graduation is arranged between the incremental graduation and the incremental detector arrangement (26), said scanning grating being embodied as a transmission scanning grating or as a phase grating.

14. Optical position measuring device according to Claim 13, **characterized in that** the following relationships apply to the graduation period ($d_1$) of the incremental graduation and the periodicity ($d_3$) of the resultant light pattern in the detection plane:

$$d_1 = d_2 \cdot (u + v)/v$$

$$d_3 = d_2 \cdot (u + v)/u$$

where:

$d_1$ := graduation period of the incremental graduation
$d_2$ := effective graduation period of the scanning grating
$d_3$ := periodicity of the light pattern resulting in the detection plane
$u$ := distance between the incremental graduation and the scanning grating
$v$ := distance between the scanning grating and the detection plane.

**Revendications**

1. Dispositif optique de mesure d'une position, destiné à déterminer la position d'un premier objet (O1) par rapport à un deuxième objet (O2) mobile par rapport à celui-ci le long d'au moins une direction de mesure (x) comportant :

   - un étalon (10) s'étendant le long de la direction de mesure (x), qui est relié avec le premier objet (O1) et qui comprend au moins une graduation de mesure (11) qui est constituée de zones graduées (11.1, 11.2) placées en alternance le long de la direction de mesure (x), dotées de caractéristiques optiques différentes et
   - un module de balayage (20), qui est relié avec le deuxième objet (02) et qui comprend au moins une source lumineuse (21), un agencement de détecteurs (25), ainsi qu'au moins un agencement de fibres optiques (23), qui est constitué d'une pluralité de fibres optiques (23,1) disposées de façon mutuellement adjacentes, dont les surfaces d'entrée d'image font face à l'étalon (10) et dont les surfaces de sortie d'image font face à l'agencement de détecteurs (25),
   - de l'interaction entre les faisceaux émis par la source lumineuse (21) et la graduation de mesure (11) résultant un motif lumineux et l'agencement de fibres optiques (23) transférant le motif lumineux dans un plan de détection de l'agencement de détecteurs (25),

**caractérisé en ce que** l'agencement de fibres optiques (23) est conçu sous la forme d'une plaque à fibre optique et entre la surface de sortie d'image de la plaque à fibre optique et l'agencement de détecteurs (25) est placé un milieu dans l'espace intermédiaire (29), lequel assure que les faisceaux sortant de la surface de sortie d'image adoptent sur leur trajet vers l'agencement de détecteurs (25) une déviation plus faible que dans le cas de l'absence du milieu dans l'espace intermédiaire (29).

2. Dispositif optique de mesure d'une position selon la revendication 1, **caractérisé en ce que** le milieu dans l'espace intermédiaire (29) fait preuve d'un indice de réfraction ($n_{ZM}$) de l'ordre de

$$1.3 < n_{ZM} < 2.3$$

avec

$n_{ZM}$ : = indice de réfraction du milieu dans l'espace intermédiaire.

3. Dispositif optique de mesure d'une position selon la revendication 1 ou 2, **caractérisé en ce que** l'épaisseur ($d_{ZM}$) du milieu dans l'espace intermédiaires (29) se situe dans l'ordre de

$$5\mu m < d_{ZM} < 100\mu m$$

avec

$d_{ZM}$ : = épaisseur du milieu dans l'espace intermédiaire.

4. Dispositif optique de mesure d'une position selon au moins l'une quelconque des revendications précédentes, **caractérisé en ce qu'**un agent adhésif est prévu en tant que milieu dans l'espace intermédiaire (29).

5. Dispositif optique de mesure d'une position selon au moins l'une quelconque des revendications précédentes, **caractérisé en ce que** l'épaisseur ($d_{FP}$) de la plaque à fibre optique se situe dans l'ordre de

$$2 \cdot d_x < d_{FP} < d_x / 4 \cdot p$$

avec

$d_{FP}$ : = épaisseur de la plaque à fibre optique
$d_x$ : = période de graduation d'une graduation de mesure périodique ou largeur minimale de structure d'une graduation de mesure apériodique le long de la direction de mesure
p : = coefficient de distorsion de la plaque à fibre optique, qui correspond au décalage latéral résultant du transfert du modèle lumineux par l'intermédiaire de la plaque à fibre optique entre la surface d'entrée d'image et la surface de sortie d'image relativement à la longueur de la fibre.

6. Dispositif optique de mesure d'une position selon au moins l'une quelconque des revendications précédentes, **caractérisé en ce que**

- l'agencement de détecteurs (25) est constitué d'un agencement périodique d'éléments détecteurs (25.1) individuels le long de la direction de mesure (x), dans la trame d'une périodicité de détecteurs ($P_{DET}$) définie, et
- les fibres optiques (23.1) sont placées dans la plaque à fibre optique le long de la direction de mesure (x) dans une trame périodique avec une première périodicité de fibre optique ($P_{FPx}$) pour laquelle s'applique

$$P_{FPx} \leq P_{DET}$$

avec

$P_{FPx}$ : = première périodicité de fibre optique le long de la direction de mesure x

$P_{DET}$ : = périodicité de détecteurs le long de la direction de mesure x

7. Dispositif optique de mesure d'une position selon la revendication 6, **caractérisé en ce que** les fibres optiques (23.1) sont placées dans la plaque à fibre optique le long d'une direction (y) à la perpendiculaire de la direction de mesure (x) dans une trame périodique avec une deuxième périodicité de fibre optique ($P_{FPy}$) pour laquelle s'applique

$$P_{FPy} = P_{FPx}$$

avec

$P_{FPx}$ : = première périodicité de fibre optique le long de la direction de mesure

$P_{FPy}$ : = deuxième périodicité de fibre optique le long d'une direction à la perpendiculaire de la direction de mesure.

8. Dispositif optique de mesure d'une position selon au moins l'une quelconque des revendications précédentes, **caractérisé en ce que** pour l'écart ($d_{MBE}$) entre la graduation de mesure (11) et la surface d'entrée d'image de la plaque à fibre optique s'applique

$$d_{MBE} \leq 200\mu m$$

avec

$d_{MBE}$ : = écart entre la graduation de mesure et la surface d'entrée d'image.

9. Dispositif optique de mesure d'une position selon au moins l'une quelconque des revendications précédentes, **caractérisé en ce que** la plaque à fibre optique présente une section transversale de forme rectangulaire, l'axe longitudinal du rectangle s'étendant à la parallèle de la direction de mesure (x).

10. Dispositif optique de mesure d'une position selon au moins l'une quelconque des revendications précédentes, **caractérisé en ce que** dans la plaque à fibre optique, entre les fibres optiques est placé un milieu verrier qui absorbe la lumière, lequel ne contribue pas à la génération de signaux.

11. Dispositif optique de mesure d'une position selon au moins l'une quelconque des revendications précédentes, **caractérisé en ce que** la graduation de mesure (11) est conçue sous la forme d'une graduation de mesure absolue, qui comporte un codage apériodique pour déterminer la position absolue et l'agencement de détecteurs (25) est conçu sous la forme d'un agencement de détecteurs absolu, pour détecter le modèle lumineux apériodique transféré par la graduation de mesure absolue.

12. Dispositif optique de mesure d'une position selon la revendication 11, **caractérisé en ce que** sur l'étalon (10), à la parallèle de la graduation de mesure absolue est placée une graduation de mesure (12) supplémentaire, sous la forme d'une graduation incrémentale, du balayage optique duquel résulte un modèle lumineux périodique dans le plan de détection, qui peut y être détecté par l'intermédiaire d'un agencement incrémental de détecteurs (26).

13. Dispositif optique de mesure d'une position selon la revendication 11, **caractérisé en ce que** la graduation incrémentale est conçue sous la forme d'une grille d'amplitude et pour le balayage optique de la graduation incrémentale, est placée entre la graduation incrémentale et l'agencement incrémental de détecteurs (26) une grille à balayage (28) qui est conçue sous la forme d'une grille à balayage à transmission ou d'une grille de phases.

14. Dispositif optique de mesure d'une position selon la revendication 13, **caractérisé en ce que** pour la période de graduation ($d_1$) de la graduation incrémentale et pour la périodicité ($d_3$) du modèle lumineux résultant dans le plan de détection s'appliquent les relations :

$$d_1 = d_2 \cdot (u + v) / v$$

$$d_3 = d_2 \cdot (u + v) / u$$

avec

d$_1$ : = période de graduation de la graduation incrémentale
d$_2$ : = période de graduation effective de la grille à balayage
d$_3$ : = périodicité du modèle lumineux résultant dans le plan de détection
u : = écart entre la graduation incrémentale et la grille à balayage
v : =: écart entre la grille à balayage et le plan de détection.

Fig. 1

Fig. 2

Fig. 3

Fig. 4

EP 3 260 820 B1

$P_{DET}$

25.1

0° 90° 180° 270° 0° 90° 180° 270° 0° 90° 180° 270°

25

29

23

11

$P_{FP_X}$

$d_x$

10

z

y    x

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0470291 B1

- EP 1382941 A

**In der Beschreibung aufgeführte Nicht-Patentliteratur**

- Analysis of Grating Imaging and its Application to Displacement Metrology. *SPIE Vol. 36, 1st European Congress on Optics applied to Metrology,* 1977, vol. 36, 325-332